# FASCICULE DE BREVET EUROPEEN

(11) **EP 0 750 933 B1**
(45) Date de publication et mention de la délivrance du brevet: **04.04.2001**
(21) Numéro de dépôt: 96401417.9
(22) Date de dépôt: 26.06.1996
(51) Int. Cl.: B01D 53/04

(54) **Procédé et dispositif pour préparation d'un flux substantiellement épuré en l'une au moins des impuretés oxygène et monoxyde de carbone**
Verfahren und Vorrichtung zur Herstellung von im wesentlichen gereinigten Flux von mindestens einer der Verunreinigungen aus Sauerstoff und Kohlstoffmonoxid
Process and apparatus for the preparation of a substantially purified flux of at least one of the impurities chosen between oxygen and carbon monoxide

(30) Priorité: 30.06.1995 FR 9507943
(43) Date de publication de la demande: 02.01.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Darredeau, Bernard, 78500 Sartrouville (FR); Gary, Daniel, 78180 Montigny le Bretonneux (FR); Muller, Christiane, Hangzhou 310004 (CN)
(74) Mandataire: Le Moenner, Gabriel

(56) Documents cités:
- EP-A- 0 584 747
- EP-A- 0 590 946
- EP-A- 0 662 595
- US-A- 5 106 399

## Description

La présente invention concerne un procédé et un dispositif pour la préparation d'un flux d'un composé inerte chimiquement tel l'azote et les gaz rares, substantiellement épuré en l'une au moins des impuretés oxygène et monoxyde de carbone.

Les composés inertes tels l'azote et les gaz rares, à savoir l'hélium, le néon, l'argon, le krypton, le xénon et leurs mélanges, sont couramment mis en oeuvre dans de nombreuses industries, en particulier l'industrie électronique. Cette dernière tout particulièrement, requiert lesdits composés inertes aussi purs que possibles et, notamment, débarrassés de leurs impuretés oxygène(O₂) et monoxyde de carbone (CO).

La demande de brevet EP-A-0.509.871 décrit un procédé de production d'argon selon lequel de l'argon impur, ayant une teneur en oxygène inférieure à 1000 vpm (volume par million) environ, est mis à réagir avec de l'hydrogène en excès au voisinage de la température ambiante, dans un lit catalytique constitué de particules d'au moins un métal de la famille du platine supportées par un support particulaire à forte surface spécifique.

La demande de brevet EP-A-0.444.422 décrit un procédé pour éliminer de l'oxygène contenu à hauteur de 0,8 % molaire dans de l'argon chaud au moyen d'un lit d'un ou plusieurs métaux réducteurs du type getter. Ce getter peut contenir du cuivre, du nickel ou d'autres métaux qui adsorbent chimiquement l'oxygène et peuvent être régénérés avec de l'hydrogène.

Il est également connu par le brevet US-A-3.996.028 un procédé de purification de l'argon par passage de cet argon au travers d'une zéolithe synthétique du type A qui permet l'adsorption de l'oxygène seulement. L'adsorption est réalisée au moyen d'une zéolithe dont la température est maintenue entre -186°C ( le point d'ébullition de l'argon) et -133°C.

Par ailleurs, le document EP-A-584747 décrit un procédé de purification des gaz du groupe de l'hélium à une température supérieure à -40°C par adsorption et/ou catalyse oxydative des impuretés hydrogène, oxygène et vapeur d'eau. Les adsorbants et/ou catalyseurs employés sont des matériaux contenant des oxydes métalliques, tels que nickel et/ou cuivre supportés sur alumine et/ou tamis moléculaire.

En outre, le document EP-A-662595 enseigne un procédé et un dispositif de purification d'azote sous forme liquide par adsorption des impuretés hydrogène, oxygène et monoxyde de carbone.

La présente invention a pour premier objet un procédé pour la préparation d'un flux épuré en les impuretés CO et O₂ qu'il contient, ce flux comprenant au moins 90 % molaire d'un composé inerte choisi parmi l'azote et les gaz rares, ce procédé pouvant être mis en oeuvre pour des flux présentant une température basse, généralement inférieure à -40°C; ce flux étant à l'état gazeux ou à l'état liquide.

Selon un second aspect, l'invention concerne encore un dispositif pour la préparation d'un flux épuré en l'une au moins des impuretés O₂ et CO.

L'invention consiste alors en un procédé de préparation d'un flux substantiellement épuré en l'une au moins des impuretés O₂ et CO, caractérisé en ce que :
a) on refroidit à une température inférieure à -40°C un flux à épurer comprenant d'une part, au moins 90 % molaire d'un composé choisi parmi l'azote, l'hélium, le néon, l'argon, le krypton, le xénon ou d'un mélange de ces composés, et d'autre part, l'une au moins des impuretés O₂ et CO,
b) on fait passer le flux refroidi au travers d'un adsorbant pour l'adsorption de l'une au moins des impuretés O₂ et CO, ledit adsorbant comprenant au moins un oxyde métallique poreux mixte de cuivre et de manganèse,
c) on récupère un flux substantiellement épuré en l'une au moins des impuretés O₂ et CO,
un procédé selon lequel le flux est constitué d'azote liquide étant exclu.

L'invention va être à présent décrite en détail en référence à la description qui suit et aux figures.

La figure 1 représente un dispositif pour l'élimination des impuretés O₂ et CO présentes dans un flux d'un gaz rare liquide contenu dans une cuve de stockage.

La figure 2 représente un dispositif pour l'élimination des impuretés O₂ et CO contenues dans un gaz rare liquide, au niveau d'une borne de dépotage.

La figure 3 représente une cuve de stockage d'un gaz rare liquide pourvue d'un moyen de purification de ce gaz rare liquide, reliée à une cuve pour son transport.

La figure 4 représente un dispositif pour la préparation d'argon liquide de haute pureté à partir d'air.

Le flux à épurer comprend généralement au moins 96 % molaire d'un composé choisi parmi l'azote et les gaz rares que sont l'hélium, le néon, l'argon, le krypton et le xénon. Lorsque le gaz rare est l'argon, le complément à 100% est habituellement composé d'azote et de l'impureté 0₂.

Le flux à épurer comprend généralement moins de 1000 vpm en impuretés O₂, généralement moins de 100 vpm en impuretés O₂. Lorsque le flux à épurer est essentiellement constitué d'azote gazeux, sa teneur en monoxyde de carbone peut être inférieure à 30 vpm, plus généralement une teneur comprise entre 0,15 et 1,5 vpm. Lorsque le flux à épurer est constitué essentiellement d'un ou plusieurs gaz rares, par exemple l'argon, il ne contient habituellement pas ou très peu de monoxyde de carbone. Toutefois, une telle impureté peut contaminer accidentellement ledit composé inerte. Dans ce cas, le procédé selon l'invention peut être mis en oeuvre pour éliminer le CO en une teneur pouvant atteindre 5 vpm au sein dudit gaz rare.

Le procédé selon l'invention est plus particulièrement adapté à l'épuration d'un flux refroidi à une température inférieure à une température T, T étant égal à Pₑ + 30°C. On entend par "Pₑ" le point d'ébullition à la pression de travail dudit flux. Le flux traité peut être à l'état gazeux ou, selon une caractéristique avantageuse du procédé de l'invention, à l'état liquide. Plus particulièrement, le flux à épurer est constitué d'argon gazeux refroidi à une température inférieure à -130°C ou d'un mélange de krypton et de xénon refroidi à une température inférieure à -100°C, les températures étant mesurées à la pression de travail. Selon une caractéristique particulièrement avantageuse du procédé de l'invention, le flux à épurer est constitué d'argon liquide.

Un oxyde métallique comprenant un oxyde mixte de cuivre et de manganèse et, le cas échéant, d'autres oxydes de métaux de transition, est tout particulièrement préféré. Avantageusement, de tels oxydes mixtes de cuivre et de manganèse sont ceux connus sous la désignation "hopcalites". Les hopcalites sont des composés bien connus en tant que catalyseurs permettant l'oxydation du monoxyde de carbone à la température ordinaire. Outre l'oxyde de manganèse (MnO₂) et l'oxyde de cuivre (CuO), l'hopcalite peut contenir d'autres oxydes métalliques, notamment des oxydes de cobalt et d'argent. A cet égard, on peut notamment citer les hopcalites contenant (% en poids) 50 % de MnO₂, 30 % de CuO, 15 % de Co₂O₃ et 5 % d'Ag₂O. Une hopcalite tout particulièrement préférée selon la présente invention est cependant une hopcalite binaire comprenant essentiellement MnO₂ et CuO et, le cas échéant des traces d'au moins un métal choisi dans le groupe constitué par le platine, le palladium, l'osmium, l'iridium, le rhodium et le rhuthénium. Ce dernier type d'hopcalite comprend plus particulièrement de 40 à 70 % en poids de MnO₂ et de 25 à 50 % en poids de CuO. Plus préférentiellement encore, une telle hopcalite comprend environ 60 % en poids de MnO₂ et 40 % en poids de CuO.

Un adsorbant selon la présente invention présente habituellement un diamètre de pores moyen supérieur à 0,4 nm, de préférence compris entre 0,5 et 4 nm. Le volume des pores de cet adsorbant peut être supérieur à 0,1 cm³/g, de préférence compris entre 0,15 et 5 cm³/g. La surface spécifique peut être supérieure à 150 m²/g, de préférence comprise entre 150 et 300 m²/g. L'adsorbant peut se présenter sous la forme d'une poudre, de bâtonnets ou, de préférence, sous forme de granulés ou de billes. Le diamètre de ces granulés et billes peut être compris entre 1 et 5 mm.

Le flux à épurer selon la présente invention, lorsqu'il est à l'état gazeux, est habituellement soumis à une pression comprise entre 1 et 200 bar, de préférence 1 à 15 bar. Lorsque ce flux est à l'état liquide, il est habituellement soumis à une pression comprise entre 1 et 20 bar, préférentiellement entre 1 et 15 bar. Le flux refroidi que l'on fait passer au travers de l'adsorbant présente habituellement une vitesse linéaire supérieure à 10⁻³ m/s, de préférence comprise entre 10⁻³ et 2.10⁻² m/s.

Suite à l'élimination des impuretés O₂ et/ou CO, l'adsorbant mis en oeuvre peut être régénéré de manière classique, au moyen d'un gaz de régénération. Ce gaz de régénération peut être passé au travers de l'adsorbant à co-courant ou, de préférence, à contre-courant du flux à épurer. Habituellement, ledit gaz consiste en de l'azote gazeux ou un mélange d'azote gazeux et d'un gaz réducteur comme un hydrocarbure, ou de préférence l'hydrogène. Un tel mélange peut contenir moins de 5 % molaire de gaz réducteur. La température du gaz de régénération peut être comprise entre environ 100°C et 250°C, de préférence comprise entre 150°C et 250°C.

L'adsorbant peut être réparti en deux zones de traitement distinctes, montées en parallèle, l'une de ces zones étant régénérée pendant que l'autre est en contact avec le flux à épurer.

Préalablement à une première utilisation de l'adsorbant en vue de l'élimination desdites impuretés O₂ et CO du flux à épurer, on peut activer ledit adsorbant, en vue notamment de le réduire et d'éliminer les traces d'eau qu'il pourrait contenir. Cette activation peut être réalisée à une température comprise entre 150°C et 300°C, de préférence de l'ordre de 250°C. Elle est réalisée avantageusement sous balayage d'une atmosphère constituée d'azote et d'hydrogène.

Préalablement ou postérieurement à l'élimination des impuretés O₂ et CO selon le procédé de l'invention, le flux traité peut être débarrassé d'autres de ces impuretés par des méthodes connues en elles-mêmes. Ainsi, si le flux traité contient de l'hydrogène, celui-ci peut être éliminé par distillation. La présence d'hydrogène est plus particulièrement notable quand le flux traité est essentiellement constitué d'azote. Quand le flux traité est essentiellement constitué d'un gaz rare, notamment l'argon, obtenu par distillation d'air, il est généralement requis d'en éliminer toutes traces d'azote. Cette élimination peut se faire de manière classique dans une colonne de déazotation, par exemple selon le procédé décrit dans la demande de brevet EP-A-0.509.871.

Le procédé selon l'invention permet l'obtention d'un flux comprenant moins de 100 ppb, voire moins de 10 ppb et même moins de 2 ppb, en chacune des impuretés O₂ et CO.

Selon un autre aspect, l'invention concerne un dispositif pour la préparation d'un flux substantiellement épuré en l'une au moins des impuretés O₂ et CO, ledit flux comprenant au moins 90 % molaire, de préférence au moins 96 % molaire d'un composé choisi parmi l'azote et un gaz rare tel l'hélium, le néon, le krypton, le xénon ou plus préférentiellement l'argon, ou d'un mélange de ces composés. Ce dispositif est caractérisé en ce qu'il comprend une source du flux à épurer reliée à l'entrée d'au moins une zone d'adsorption, cette zone d'adsorption comprenant un adsorbant pour l'adsorption de l'une au moins des impuretés O₂ et CO, ledit adsorbant étant essentiellement constitué d'un oxyde métallique poreux. La sortie de la zone d'adsorption est pourvue d'une conduite de raccordement débouchant dans une cuve de stockage ou dans un poste d'utilisation du flux épuré en l'une au moins des impuretés O₂ et CO. Lorsque le flux à épurer est constitué essentiellement d'un ou plusieurs gaz rares à l'état liquide, il peut, après épuration, être vaporisé en vue d'applications ultérieures.

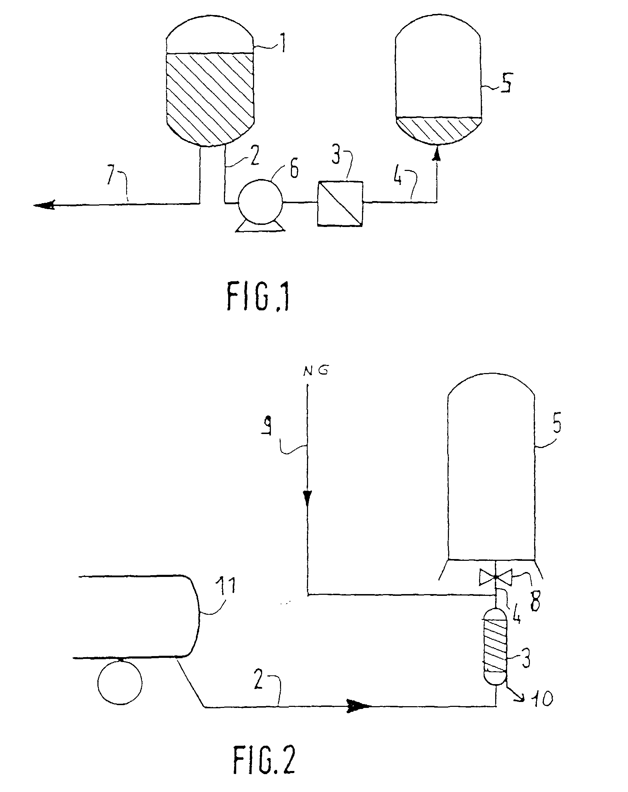

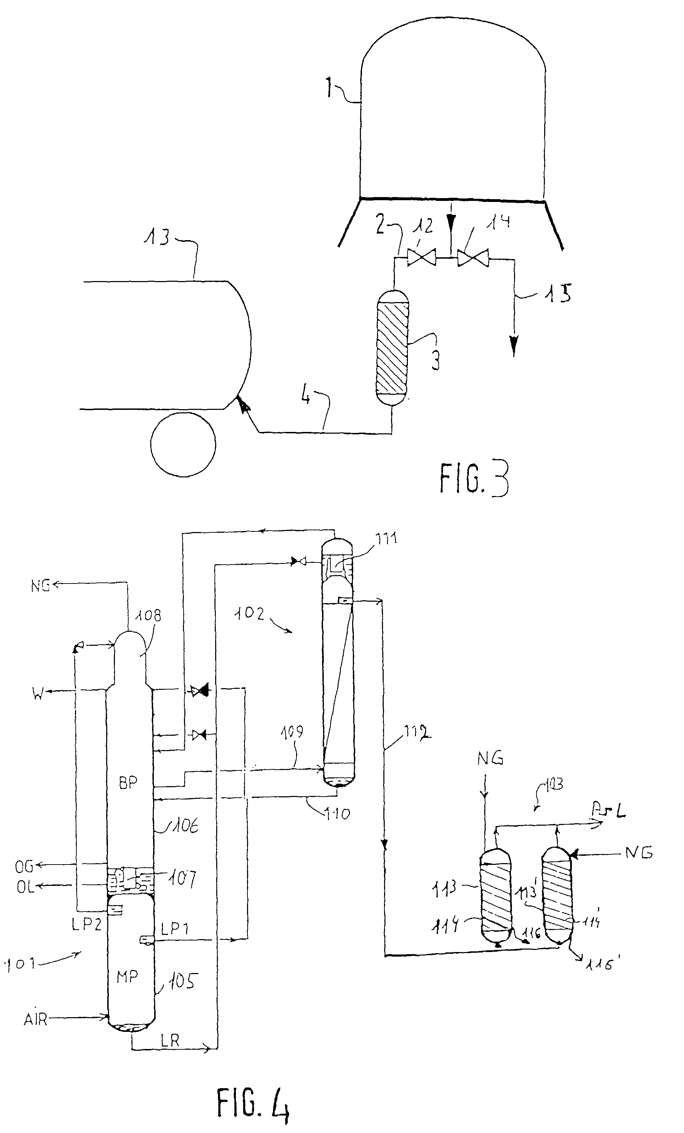

La figure 1 représente un dispositif selon l'invention, comprenant une source d'argon liquide à purifier en son impureté O₂ et, le cas échéant, en son impureté CO, consistant en une cuve de stockage fixe d'argon liquide. Celle-ci est reliée par une conduite 2, munie d'une pompe 6 à l'entrée d'un réacteur 3 comprenant au moins un adsorbant selon l'invention à base d'un oxyde métallique poreux permettant l'élimination de l'une ou plusieurs desdites impuretés. Selon un aspect particulièrement avantageux de l'invention, l'adsorbant est un oxyde mixte de cuivre et de manganèse, de préférence une hopcalite.

La sortie du réacteur 3 est munie d'une conduite 4 de raccordement débouchant dans une cuve de stockage 5 d'argon liquide purifié. La source d'argon liquide 1 est également munie d'une conduite 7 pour l'amenée d'argon liquide impur vers son lieu d'utilisation (non représenté).

Le dispositif représenté à la figure 1 permet de fournir de l'argon liquide purifié ou non purifié, à la demande et selon les besoins de l'utilisateur. Ce dispositif représenté à la figure 1 peut être facilement mis en place chez l'utilisateur d'argon liquide dans la mesure où il rajoute seulement un réacteur 3 et des moyens de liaison 2 et 4 à une installation fournissant déjà de l'argon liquide impur.

La figure 2 représente un dispositif selon l'invention comportant une source d'argon liquide à purifier consistant en une cuve de stockage d'argon liquide mobile 11, notamment une cuve d'un camion. Celle-ci est reliée par une conduite 2 à l'entrée d'un réacteur 3 comprenant au moins un adsorbant conforme à l'invention comprenant un oxyde métallique poreux, permettant l'élimination de l'impureté O₂ et, le cas échéant, de l'impureté CO, contenues dans l'argon liquide. La sortie dudit réacteur 3 est munie d'une conduite de raccordement 4, pourvue d'une vanne 8, débouchant dans une cuve de stockage d'argon liquide purifié 5. Le réacteur 3 est également relié par une conduite 9 à une source d'azote gazeux NG (non représenté). L'azote gazeux permet la régénération de l'adsorbant par balayage à contre-courant. L'azote gazeux est évacué du réacteur 3 par la conduite 10.

Le dispositif représenté à la figure 2 permet de purifier l'argon liquide sortant de la cuve 11 immédiatement avant son stockage dans la cuve de stockage 5.

Le dispositif représenté à la figure 3 comporte une cuve de stockage fixe 1 d'argon liquide à purifier, reliée par une conduite 2, munie d'une vanne 12, à l'entrée d'un réacteur 3 comportant un adsorbant tel que défini ci-dessus. La sortie de ce réacteur est reliée par une conduite 4 à une cuve de stockage mobile 13 d'argon liquide purifié. La conduite 2 est pourvue d'une conduite de dérivation 15 munie d'une vanne 14.

En vue du remplissage de la cuve de stockage mobile 13, on ouvre la vanne 12. L'argon liquide impur est amené de la cuve de stockage 1 par la conduite 2 dans le réacteur 3. L'argon liquide purifié est alors amené du réacteur 3 dans la cuve mobile 13. La vanne 14 peut être ouverte ou fermée. Lorsqu'elle est ouverte, simultanément au remplissage de la cuve 13, on peut remplir une autre cuve mobile ou fixe (non représentée) par de l'argon liquide impur.

La figure 4 représente une installation conforme à l'invention comprenant un appareil de distillation d'air destiné à produire en basse pression, c'est-à-dire au voisinage de la pression atmosphérique, de l'oxygène gazeux OG, de l'oxygène liquide OL, de l'azote gazeux NG et, à une pression de l'ordre de 1,8 x 10⁵ Pa, de l'argon liquide ArL. Cette installation comporte une double colonne de distillation 101 du type dit "à minaret" 108, une colonne 102 de production d'argon liquide impur et un appareil 103 d'élimination de l'oxygène de l'argon impur. La double colonne 101 comprend une colonne moyenne pression 105 fonctionnant par exemple sous une pression de 6.10⁵ Pa, surmontée d'une colonne basse pression 106 fonctionnant par exemple un peu au-dessus de la pression atmosphérique. La colonne 106 comprend une conduite de retour 110 et une conduite 109 dite "piquage argon". Les conduites 109 et 110 sont reliées à la colonne 102. L'air à traiter est introduit à la base de la colonne 105, et la vapeur de tête (azote) de cette dernière est mise en relation d'échange thermique avec le liquide de cuve (oxygène) de la colonne 106 au moyen d'un vaporiseur-condenseur 107.

La colonne 102 comporte 100 plateaux théoriques au moins, de préférence de 100 à 130 plateaux théoriques. Cette colonne peut être équipée d'un garnissage, notamment d'un garnissage organisé, avantageusement un garnissage ondulé-croisé, tel que décrit dans le document WO-A-89/10527. L'argon impur contient ainsi environ 100 vpm au plus, en fonction du nombre de plateaux théoriques mis en oeuvre. La colonne 102 Comporte un condenseur de tête 111 refroidit par du liquide riche détendu.

Le mode de fonctionnement des colonnes 101 et 102 est décrit dans la demande de brevet EP-A-0.509.871. Ce mode de fonctionnement est intégré pour référence à la présente description.

L'appareil 103 comprend deux réacteurs 113 et 113' chargés chacun en adsorbant conforme à l'invention, par exemple une hopcalite. Lorsque l'un des réacteurs 113 ou 113' est en régénération, l'autre est utilisé pour purifier de l'argon liquide provenant de la colonne 102 par l'intermédiaire de la conduite 112. Celle-ci est, si nécessaire, pourvue d'une pompe cryogénique L'argon liquide est récupéré à la sortie du réacteur 113 ou 113'. La régénération des adsorbants est réalisé par balayage d'azote gazeux à contre -courant. L'azote gazeux est évacué hors des réacteurs 113 et 113' par les conduites 116 et 116'.

L'argon liquide purifié peut être envoyé directement vers une zone de stockage ou un poste d'utilisation, ou bien être préalablement traité dans une colonne de déazotation classique en vue de l'élimination de l'impureté azote qu'il contient.

Les dispositifs représentés aux figures 1 à 3 peuvent produire de l'argon de haute pureté, à l'état liquide, exempt en ses impuretés O₂, et, le cas échéant, CO. Ces dispositifs peuvent être également mis en oeuvre pour la préparation d'autres gaz inertes à l'état liquide, à savoir le néon, le xénon, le krypton et l'hélium ou un mélange de ces composés entre eux et/ou avec de l'argon.

Les exemples qui suivent ont pour but d'illustrer la présente invention.

Dans les exemples, l'adsorbant mis en oeuvre était une hopcalite commercialisée soit par la société Dräger et comprenant environ 63 % de MnO₂ et environ 37 % de CuO, soit par la société Molecular Products et comprenant 60 % en poids environ de MnO₂ et 40 % en poids environ de CuO.

L'impureté monoxyde de carbone a été mesurée au moyen d'un chromatographe RGA3 commercialisé par la société Trace Analytical. L'impureté oxygène a été mesurée en continu au moyen d'un analyseur OSK, commercialisé par la société Osaka Sanso Kogyo Ltd. Le seuil de détection du chromatographe RGA3 est inférieur à 2 ppb (partie par milliard en volume) pour le monoxyde de carbone. Le seuil de détection de l'analyseur OSK est de 2 ppb pour l'oxygène.

### Exemple 1 : traitement d'azote gazeux à -170°C, à 8 bar.

On a fait passer au travers d'un adsorbant de type hopcalite commercialisé par la société Dräger, contenu dans un réacteur de 3 litres, un flux d'azote gazeux à -170°C pressurisé à 8 bar. L'azote gazeux contenait 1 vpm de CO et 3 vpm d'O₂ à l'entrée du réacteur. Le débit du flux était de 33 Nm³/h.

Après 80 heures de traitement, on a mesuré la teneur résiduelle en O₂ et en CO à la sortie du réacteur. La teneur en oxygène de l'azote était inférieure à 2 ppb et celle en CO était inférieure à 100 ppb.

### Exemple 2 : traitement d'argon liquide à -165°C, à 8 bar.

On a fait passer au travers d'un adsorbant de type hopcalite commercialisé par la société Dräger, un flux d'argon liquide pressurisé à 8 bar, à un débit de 33 Nm³/h. L'adsorbant était contenu dans un réacteur de 3 litres. La teneur en oxygène de cet argon liquide était de 3 vpm à l'entrée du réacteur.

Après 32 heures de traitement, la teneur résiduelle en oxygène à la sortie du réacteur était de 2 ppb.

### Exemple 3 : traitement d'argon liquide à -165°C, à 8 bar.

On a fait passer au travers d'un adsorbant de type hopcalite commercialisé par la société Molecular Products, un flux d'argon liquide à -165°C, pressurisé à 8 bar. L'adsorbant était contenu dans un réacteur de 3 litres. Le débit du flux était de 33 Nm³/h. La teneur en oxygène de cet argon liquide était de 3 vpm à l'entrée du réacteur. De plus, il a été artificiellement pollué par 1 vpm de C0.

Après 45 heures de traitement, la teneur en oxygène de l'argon liquide n'était que de 2 ppb et celle en CO n'était pas détectée.

### Exemple 4: traitement d'argon gazeux à -150°C, à 8 bar.

On a fait passer au travers d'un adsorbant de type hopcalite commercialisé par la société Molecular Products, un flux d'argon gazeux à -150°C, pressurisé à 8 bar. L'adsorbant était contenu dans un réacteur de 3 litres. Le débit du flux était de 33 Nm³/h. La teneur en oxygène de cet argon gazeux était de 3 vpm à l'entrée du réacteur. De plus, il a été artificiellement pollué par 1 vpm de C0.

Après 40 heures de traitement, la teneur en oxygène de l'argon gazeux était de 2 ppb et celle en CO n'était pas détectée.

### Exemple 5: traitement d'argon gazeux à -150°C, à 8 bar.

On a fait passer au travers d'un adsorbant de type hopcalite commercialisé par la société Molecular Products, un flux d'argon gazeux à -150°C, pressurisé à 8 bar. L'adsorbant était contenu dans un réacteur de 3 litres. Le débit du flux était de 33 Nm³/h. La teneur en oxygène de cet argon gazeux était de 20 vpm à l'entrée du réacteur.

Après 15 heures de traitement, la teneur en oxygène de l'argon gazeux était de 2 ppb.

## Revendications

1. Procédé de préparation d'un flux substantiellement épuré en l'une au moins des impuretés O₂ et CO, le flux à épurer comprenant au moins 90 % molaire d'un composé choisi parmi l'azote, l'hélium, le néon, l'argon, le krypton, le xénon ou d'un mélange de ces composés, caractérisé en ce que :
a) on fait passer le flux à épurer au travers d'un adsorbant comprenant au moins un oxyde métallique poreux mixte de cuivre et de manganèse, ledit flux ayant une température inférieure à -40°C,
b) on récupère un flux substantiellement épuré en l'une au moins des impuretés O₂ et CO,
un procédé selon lequel le flux est constitué d'azote liquide étant exclu.

2. Procédé selon la revendication 1, caractérisé en ce que le flux à épurer a une température inférieure à T = Pₑ + 30°C, Pₑ étant le point d'ébullition à la pression de travail dudit flux.

3. Procédé selon l'une des revendications 1 et 2, caractérisé en ce que le flux est à l'état liquide.

4. Procédé selon l'une des revendications 1 à 3, caractérisé en ce que le flux à épurer est essentiellement constitué d'argon liquide.

5. Procédé selon l'une des revendications 1 à 3, caractérisé en ce que le flux à épurer est essentiellement constitué d'argon gazeux présentant une température inférieure à -130°C, mesurée à la pression de travail.

6. Procédé selon l'une des revendications 1 à 5, caractérisé en ce que le flux à épurer comprend moins de 100 vpm en l'impureté O₂

7. Procédé selon l'une des revendications 1 à 6, caractérisé en ce que l'adsorbant est une hopcalite.

8. Procédé selon la revendication 7, caractérisé en ce que l'adsorbant comprend de 40 à 70 % en poids d'un oxyde de manganèse et de 25 à 50 % en poids d'un oxyde de cuivre.

9. Procédé selon l'une des revendications 1 à 8, caractérisé en ce que postérieurement à l'adsorption de l'impureté, on régénère l'adsorbant.

10. Procédé selon l'une des revendications 1 à 9, caractérisé en ce que l'adsorbant est réparti en deux zones distinctes, l'une de ces zones permettant l'adsorption de l'impureté tandis que l'autre est régénérée.

11. Dispositif pour la préparation d'un flux substantiellement épuré en l'une au moins des impuretés O₂ et CO, ledit flux comprenant au moins 90 % molaire d'argon, caractérisé en ce que ledit dispositif comprend une source du flux à épurer (1, 11, 101 ) reliée à l'entrée d'au moins une zone d'adsorption (3, 103) comportant un adsorbant (114 114') pour l'adsorption de l'une au moins des impuretés O₂ et CO, ledit adsorbant (114, 114') comprenant au moins un oxyde métallique poreux, mixte de cuivre et de manganèse, la sortie de la zone d'adsorption (3, 103) étant pourvue d'une conduite de raccordement ( 4) débouchant dans une cuve de stockage (5, 13) ou dans un poste d'utilisation du flux épuré en l'une au moins desdites impuretés, et en ce que la source du flux à épurer est une unité de production d'argon comprenant une double colonne de distillation d'air (101)couplée à une colonne de production d'argon impur (102).

12. Dispositif selon la revendication 11, caractérisé en ce que la colonne de production d'argon impur comporte de 100 à 130 plateaux théoriques.

13. Dispositif selon l'une des revendications 11 ou 12, caractérisé en ce qu'il comporte deux zones d'adsorption (113, 113') montées en parallèle.

## Claims

1. Process for preparing a flow which is substantially purified with respect to at least one of the impurities O₂ and CO, the flow to be purified comprising at least 90 mol% of a compound chosen from nitrogen, helium, neon, argon, krypton, xenon or a mixture of these compounds, characterized in that:
a) the flow to be purified is passed through an adsorbent comprising at least one porous metal mixed copper and manganese oxide, the said flow having a temperature of less than -40°C,
b) a flow which is substantially purified with respect to at least one of the impurities O₂ and CO is recovered,
a process according to which the flow consists of liquid nitrogen being excluded.

2. Process according to Claim 1, characterized in that the flow to be purified has a temperature of less than T = Pₑ + 30°C, Pₑ being the boiling point of the said flow at the working pressure.

3. Process according to one of Claims 1 and 2, characterized in that the flow is in the liquid state.

4. Process according to one of Claims 1 to 3, characterized in that the flow to be purified essentially consists of liquid argon.

5. Process according to one of Claims 1 to 3, characterized in that the flow to be purified essentially consists of argon gas having a temperature of less than -130°C, measured at the working pressure.

6. Process according to one of Claims 1 to 5, characterized in that the flow to be purified comprises less than 100 ppm by volume of the impurity O₂.

7. Process according to one of Claims 1 to 6, characterized in that the adsorbent is a hopcalite.

8. Process according to Claim 7, characterized in that the adsorbent comprises 40 to 70% by weight of a manganese oxide and 25 to 50% by weight of a copper oxide.

9. Process according to one of Claims 1 to 8, characterized in that the adsorbent is regenerated after the adsorption of the impurity.

10. Process according to one of Claims 1 to 9, characterized in that the adsorbent is divided into two separate zones, one of these zones allowing the impurity to be adsorbed while the other is regenerated.

11. Device for the preparation of a flow which is substantially purified with respect to at least one of the impurities O₂ and CO, the said flow comprising at least 90 mol% of argon, characterized in that the said device comprises a source (1, 11, 101) of the flow to be purified, connected to the entry of at least one adsorption zone (3, 103) comprising an adsorbent (114, 114') for adsorbing at least one of the impurities O₂ and CO, the said adsorbent (114, 114') comprising at least one porous metal mixed copper and manganese oxide, the exit of the adsorption zone (3, 103) being provided with a connection conduit (4) leading into a storage tank (5, 13) or into a station for use of the flow which is purified with respect to at least one of the said impurities, and in that the source of the flow to be purified is an argon production unit comprising a double air distillation column (101) coupled to a column (102) for producing impure argon.

12. Device according to Claim 11, characterized in that the impure-argon production column includes 100 to 130 theoretical plates.

13. Device according to one of Claims 11 or 12, characterized in that it includes two adsorption zones (113, 113') mounted in parallel.

## Patentansprüche

1. Verfahren zur Herstellung eines weitgehend von mindestens einer der Verunreinigungen O₂ und CO befreiten Stroms, wobei der zu reinigende Strom mindestens 90 Mol-% einer unter Stickstoff, Helium, Neon, Argon, Krypton, Xenon ausgewählten Verbindung oder ein Gemisch dieser Verbindungen enthält, dadurch gekennzeichnet, daß man:
a) den zu reinigenden Strom über ein Adsorptionsmittel leitet, das mindestens ein poröses Metallmischoxid von Kupfer und Mangan enthält, wobei der Strom eine Temperatur unter -40°C aufweist,
b) einen von mindestens einer der Verunreinigungen O₂ und CO weitgehend befreiten Strom zurückgewinnt,
mit der Maßgabe, daß bei dem Verfahren ein Strom aus flüssigem Stickstoff ausgeschlossen ist.

2. Verfahren nach Anspruch 1, dadurch gekennzeichnet, daß der zu reinigende Strom eine Temperatur unter T = Kp + 30°C aufweist, wobei Kp der Kochpunkt des Stroms unter dem Arbeitsdruck ist.

3. Verfahren nach Anspruch 1 oder 2, dadurch gekennzeichnet, daß der Strom in flüssigem Zustand vorliegt.

4. Verfahren nach einem der Ansprüche 1 bis 3, dadurch gekennzeichnet, daß der zu reinigende Strom im wesentlichen aus flüssigem Argon besteht.

5. Verfahren nach einem der Ansprüche 1 bis 3, dadurch gekennzeichnet, daß der zu reinigende Strom im wesentlichen aus gasförmigem Argon mit einer Temperatur unter -130°C, gemessen beim Arbeitsdruck, besteht.

6. Verfahren nach einem der Ansprüche 1 bis 5, dadurch gekennzeichnet, daß der zu reinigende Strom weniger als 100 Vol.-ppm der Verunreinigung O₂ enthält.

7. Verfahren nach einem der Ansprüche 1 bis 6, dadurch gekennzeichnet, daß man als Adsorptionsmittel einen Hopcalit einsetzt.

8. Verfahren nach Anspruch 7, dadurch gekennzeichnet, daß das Adsorptionsmittel 40 bis 70 Gew.-% eines Manganoxids und 25 bis 50% eines Kupferoxids enthält.

9. Verfahren nach einem der Ansprüche 1 bis 8, dadurch gekennzeichnet, daß man das Adsorptionsmittel nach der Adsorption der Verunreinigung regeneriert.

10. Verfahren nach einem der Ansprüche 1 bis 9, dadurch gekennzeichnet, daß man das Adsorptionsmittel in zwei verschiedene Zonen unterteilt, von denen eine die Adsorption der Verunreinigung ermöglicht, während die andere regeneriert wird.

11. Vorrichtung zur Herstellung eines weitgehend von mindestens einer der Verunreinigungen O₂ und CO befreiten Stroms, wobei der Strom mindestens 90 Mol-% Argon enthält, dadurch gekennzeichnet, daß die Vorrichtung eine Quelle (1, 11, 101) des zu reinigenden Stroms enthält, die mit dem Eingang mindestens einer Adsorptionszone (3, 103) mit einem Adsorptionsmittel (114, 114') für die Adsorption mindestens einer der Verunreinigungen O₂ und CO verbunden ist, welches mindestens ein poröses Metallmischoxid von Kupfer und Mangan enthält, wobei der Ausgang der Adsorptionszone (3, 103) mit einer Verbindungsleitung (4) versehen ist, die in einen Speicherbehälter (5, 13) oder einen Verbraucher des von mindestens einer dieser Verunreinigungen befreiten Stroms mündet, und daß es sich bei der Quelle des zu reinigenden Stroms um eine Anlage zur Produktion von Argon mit einer mit einer Säule (102) zur Produktion von unreinem Argon gekoppelten Luftdestillationsdoppelsäule (101) handelt.

12. Vorrichtung nach Anspruch 11, dadurch gekennzeichnet, daß die Säule zur Produktion von unreinem Argon 100 bis 130 theoretische Trennstufen enthält.

13. Vorrichtung nach Anspruch 11 oder 12, dadurch gekennzeichnet, daß sie zwei parallel angeordnete Adsorptionszonen (113, 113') enthält.
